# EUROPÄISCHE PATENTSCHRIFT

(11) **EP 0 846 582 B1**
(45) Veröffentlichungstag und Bekanntmachung des Hinweises auf die Patenterteilung: **11.02.2004**
(21) Anmeldenummer: 97120484.7
(22) Anmeldetag: 21.11.1997
(51) Int. Cl.: B60H 1/26

(54) **Lüfter zur Montage in einem Wand-, insbesondere einem Dachausschnitt eines Transportfahrzeugs**
Ventilator to be mounted in a wall, particularly in a roof cutout of a transport vehicle
Aérateur destiné à être monté dans une paroi, en particulier un véhicule de transport ayant une découpure de toit

(30) Priorität: 09.12.1996 DE 29621404 U
(43) Veröffentlichungstag der Anmeldung: 10.06.1998
(73) Patentinhaber: SORTIMO INTERNATIONAL AUSRÜSTUNGSSYSTEME FÜR SERVICEFAHRZEUGE GmbH, D-86441 Zusmarshausen (DE)
(72) Erfinder: Elterlein, Paul, 86152 Augsburg (DE)
(74) Vertreter: Zipse + Habersack

(56) Entgegenhaltungen:
- DE-A- 2 725 558
- DE-C- 879 522
- DE-U- 7 409 911

## Beschreibung

Die Neuerung betrifft einen Lüfter zur Montage in einem Wand-, insbesondere einem Dachausschnitt eines Transportfahrzeugs in einer Be- und einer Entlüftungsstellung in bzw. entgegen der Fahrtrichtung.

Gasflaschen gehören insbesondere bei Kundendienstfahrzeugen oft zum täglichen Gepäck, um beispielsweise vor Ort Schweißarbeiten durchführen zu können. Undichte oder mangelhaft gesicherte Gasflaschen stellen dabei eine wahrhaft "explosive" Gefahr dar. Zur Minimierung dieser Gefahr schreibt deshalb die Gesetzeslage beim Transport gefährlicher Güter eine "ausreichende" Belüftung des Fahrzeugs bei Transport von schweren Gasen und Entlüftung des Fahrzeugs bei Transport von leichten Gasen vor. Nach einer Empfehlung des Deutschen Verbandes für Schweißtechnik sind eine Lüftungsöffnung unten und oben des Transportraums, diagonal angeordnet, mit jeweils 100 cm² Querschnitt vorzusehen.

Die Funktionen Belüftung des Fahrzeugs bei Transport von schweren Gasen und Entlüftung des Fahrzeugs bei Transport von leichten Gasen lassen sich mit ein und demselben Lüfter durchführen, wenn dieser mit seinen Luftleitschaufeln in oder entgegen der Fahrtrichtung z.B. auf dem Fahrzeugdach eines Kundendienstfahrzeugs montiert wird. Je nach Montagestellung kann zwischen einer Belüftungsfunktion (Überdruck) oder einer Entlüftungsfunktion (Unterdruck, Sog) gewählt werden, um so der jeweiligen Gastransportladung entsprechen zu können. Bei der Belüftung wird im Fahrzeug ein Überdruck erzeugt, der eine eventuelle Ansammlung von schweren Gasen durch den Boden- oder Seitenlüfter herausdrückt. Bei der Entlüftung hingegen wird frische Luft von unten durch den Boden- oder Seitenlüfter angesaugt und die leichten Gase werden nach oben ausgespült.

Da bei bekannten Fahrzeuglüftern die Funktionen Be- und Entlüftung nur durch Ummontieren des Lüfters erreicht werden, kommt es in der Praxis häufig vor, daß der Fahrer den damit verbundenen Aufwand unterläßt, was verheerende Folgen nach sich ziehen kann. Ist das Gas toxisch, wird der Fahrer während der Fahrt bewußtlos, ist es entflammbar, kann es schnell explodieren.

Die DE-OS 1 455 860 beschreibt eine Einrichtung zum Be- und Entlüften des Innnenraums eines Fahrzeugs; die Einrichtung ist im Fahrzeugdach untergebracht, vorzugsweise über jedem Fahrgast; sie ermöglicht den Zutritt von Frischluft in das Fahrzeuginnere oder das Ansaugen von Luft aus dem Fahrzeuginnenraum, die sie nach außen wegführt. Die beiden unterschiedlichen Wirkungen werden durch einfaches Verstellen der Lüftungseinrichtung von Hand erzielt. Die Be- und Entlüftungseinrichtung besteht im wesentlichen aus einer in einem vom Fahrzeudach gehaltenen Gehäuse beweglichen Hülse, welche Lufteintritts- und austrittsöffnungen besitzt sowie Ablenkflügel, die je nach der Stellung der Hülse unter dynamischem Druck den Eintritt von Luft in das Fahrzeuginnere oder das Wegführen von Luft aus dem Fahrzeug durch Absaugen bewirken.

DE-C- 879 522 beschreibt einen Lüfter gemäß dem Oberbegriff des Anspruchs 1.

Der Erfindung liegt die Aufgabe zugrunde, einen Lüfter, insbesondere für Kundendienstfahrzeuge, zu schaffen, der schnell und unkompliziert zwischen den Funktionen Belüftung und Entlüftung des Fahrzeugs umstellbar ist und sich einfach auf jeden Fahrzeugtyp montieren lässt.

Die gestellte Aufgabe wird gemäß der Erfindung mit einem Lüfter gelöst, wie er durch den Anspruch 1 gekennzeichnet ist. Weiterbildungen der Erfindung sind in den Unteransprüchen beschrieben.

Der Lüfter nach der Erfindung ist mit einer Doppelfunktion ausgestattet. Mit einfacher Bedienung (manuelle Drehfunktion von innen) kann die Lüfterwelle so gedreht werden, daß man entweder eine Belüftungs-(Überdruck) oder eine Entlüftungs-Funktion (Unterdruck) erhält. Die Montage des Lüfters nach der Neuerung ist denkbar einfach. In einen vorbereiteten Ausschnitt der Fahrzeugwand, meist in einen Dachausschnitt, wird ein zylindrisches oder prismatisches Einsatzteil mit einer Luftdurchtrittsöffnung befestigt. Zur Befestigung dienen beispielsweise Blechschrauben, die durch einen Ringflansch des Einsatzteils in die Fahrzeugwand geschraubt werden. In einer Nabe des Einsatzteils, die durch Rippen mittig in der Luftdurchtrittsöffnung gehalten ist, ist eine Welle gelagert, auf der ein Lüftergehäuse befestigt ist. Am inneren Ende dieser Welle, d.h. an dem in das Fahrzeuginnere ragenden Ende, ist ein Drehgriff angebracht, mit dessen Hilfe die Welle und damit das Lüftergehäuse um 180° zwischen einer Belüftungs- und einer Entlüftungsstellung gedreht werden kann. In der Belüftungsstellung leiten Luftleitschaufeln am Lufteinlaß den Fahrtwind durch das Lüftergehäuse und die Durchtrittsöffnung des Einsatzteils ins Fahrzeuginnere, während in der Entlüftungsstellung die Luftleitschaufeln eine Sogwirkung hervorrufen, aufgrund der Luft aus dem Fahrzeuginneren durch die Durchgangsöffnung des Einsatzteils und das Lüftergehäuse zwischen den Luftleitschaufeln hindurch aus dem Fahrzeuginnern abgesaugt wird.

Um das Lüftergehäuse sowohl in der Belüftungs- als auch in der Entlüftungsstellung festzulegen, trägt die Welle einen Stift, der in den beiden genannten Stellungen in einen stirnseitigen Schlitz der Nabe einrastet. Eine zwischen Nabe und Welle gespannte Druckfeder zieht die Welle nach unten, d.h. in das Fahrzeuginnere, und den Stift in den Einrastschlitz. Mit der Welle wird auch das Lüftergehäuse mit seinen Dichtungsschläuchen auf der Unterseite gegen die Außenseite der Fahrzeugwand gezogen. Eine auf der Welle verschraubbare Rändelmutter kann in dieser unteren Stellung der Welle in Anlage gegen die Unterseite der Nabe gebracht werden, um ein Anheben der Welle und damit des Lüftergehäuses zu verhindern und somit die Belüftungs- bzw. Entlüftungsstellung des Lüftergehäuses zu sichern.

Das Einsatzteil des Lüfters hat gemäß einer Weiterbildung der Neuerung in Richtung Fahrzeuginneres einen Überstand mit Außenkerben, welcher Überstand sicherstellt, daß das Einsatzteil auch stärkere innere Wandverkleidungen ganz durchdringen kann. An den Außenkerben kann in Anpassung an den jeweiligen Fahrzeugtyp die Höhe des Einsatzteils abgeschnitten werden.

Weiterbildungen der Neuerung werden nachfolgend anhand beigefügter Zeichnungen näher erläutert. Es zeigen:
- Fig. 1: den Lüfter gemäß der Neuerung im Querschnitt und

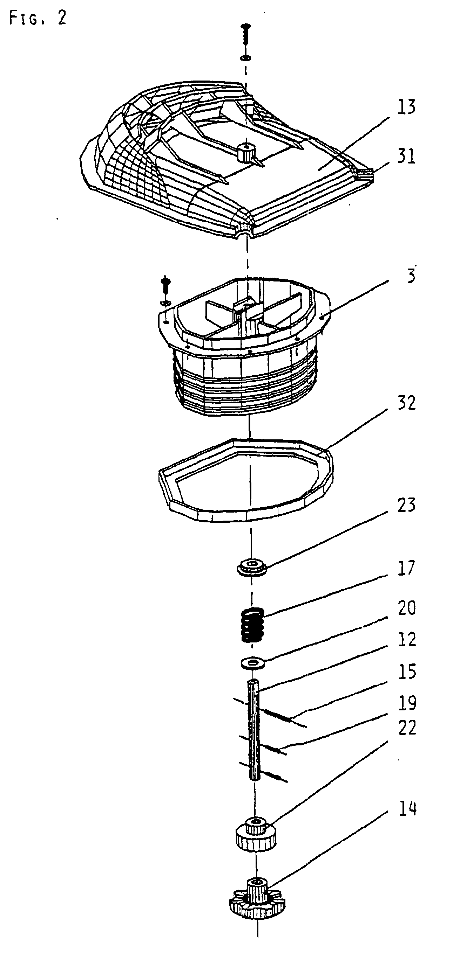

- Fig. 2: eine Explosionsdarstellung dieses Lüfters.

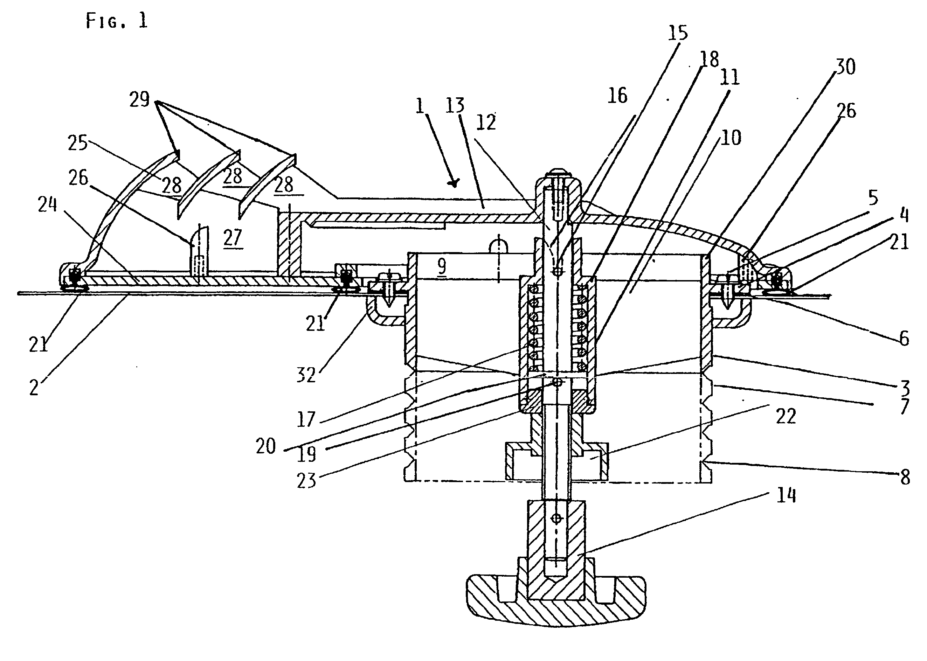

In Figur 1 ist der Lüfter 1 montiert in einen Ausschnitt eines Fahrzeugdaches 2 dargestellt. Die Montage erfolgt mittels eines zylindrischen Einsatzteils 3 mit einem äußeren Ringflansch 4, durch den Blechschrauben 5 in das Fahrzeugdachblech 2 geschraubt sind. Eine Dichtung 6 unterhalb des Ringflansches 4 dichtet das Einsatzteil 3 gegenüber dem Fahrzeugdachblech 2 ab. Ins Fahrzeuginnere ragt das Einsatzteil 3 mit einem gewissen Überstand 7, der sicherstellt, daß das Einsatzteil 3 auch stärkere innere Wandverkleidungen (nicht dargestellt) ganz durchdringen kann. An dem Überstand 7 sind in verschiedenen Höhen Außenkerben 8 ausgebildet, die ein leichtes Abschneiden des Überstandes 7 entsprechend der Stärke der inneren Wandverkleidung des jeweiligen Fahrzeugtyps erlauben.

Das prismatische Einsatzteil 3 trägt mittig innerhalb der Luftdurchtrittsöffnung 9 mithilfe radialer Rippen 10 eine Nabe 11, in der ihrerseits eine Lüfterwelle 12 gelagert ist. Diese Lüfterwelle 12 trägt auf ihrem äußeren, d. h. zur Fahrzeugaußenseite gerichteten Ende drehfest ein Lüftergehäuse 13 und an ihrem inneren Ende, das zur Fahrzeuginnenseite gerichtet ist, drehfest einen Sterngriff 14. Durch manuelle Handhabung, d. h. durch Drehen am Sterngriff 14 vom Fahrzeuginneren aus, kann somit das Lüftergehäuse 13 um 180° zwischen einer Belüftungsstellung und einer Entlüftungsstellung gedreht werden.

Zur Sicherung sowohl der Belüftungs- als auch der Entlüftungsstellung trägt die Lüfterwelle 12 einen Querstift 15, der in den beiden genannten Stellungen in einen stirnseitigen Schlitz 16 der Nabe 11 einrastet. Eine Druckfeder 17, die in einer Erweiterung 18 der Nabe 11 angeordnet ist und sich einerseits an dem Erweiterungsabsatz der Nabe und andererseits an einer durch einen Querstift 19 an der Lüfterwelle 12 festgelegten Scheibe 20 abstützt, zieht die Lüfterwelle 12 nach unten, d. h. in das Fahrzeuginnere, und den Querstift 15 in den Einrastschlitz 16.

Mit der Lüfterwelle 12 wird auch das Lüftergehäuse 13 mit seinen Dichtungsschläuchen 21 an der Unterseite gegen die Außenseite des Fahrzeugdachblechs 2 gezogen. Eine auf der Lüfterwelle 12 verschraubbare Rändelmutter 22 kann in dieser unteren Stellung der Welle 12 in Anlage gegen eine Verschlußkappe 23 der Nabenerweiterung gebracht werden, um die Dichtungsschläuche gegen das Fahrzeugdach anzudrücken und ein Anheben der Welle 12 und damit des Lüftergehäuses 13 während der Fahrt zu verhindern und somit die Belüftungs- bzw. Entlüftungsstellung des Lüftergehäuses zu sichern.

Das Lüftergehäuse 13 setzt sich aus einer Bodenplatte 24 und aus einem Gehäuseoberteil 25 zusammen, die miteinander bei 26 verschraubt sind. Zwischen beiden ist ein Luftraum 27 gebildet, der über die Luftdurchtrittsöffnung 9 des Einsatzteils 3 mit dem Fahrzeuginneren und über Zwischenräume 28 zwischen Luftleitschaufeln 29 mit der Außenluft in Verbindung steht. In der Belüftungsstellung, d. h. bei einer Anströmung von rechts in Figur 1, leiten die Luftleitschaufeln 29 den Fahrtwind durch das Lüftegehäuse 13 und die Durchtrittsöffnung 9 des Einsatzteils 3 ins Fahrzeuginnere, während in der Entlüftungsstellung, d. h. bei einer Anströmung von links in Figur 1, die Luftleitschaufeln 29 eine Sogwirkung hervorrufen, aufgrund derer Luft aus dem Fahrzeuginneren durch die Durchtrittsöffnung 9 des Einsatzteils 3 und durch das Lüftergehäuse 13 zwischen den Luftleitschaufeln 29 hindurch aus dem Fahrzeuginneren abgesaugt wird.

Es versteht sich, daß das Lüftergehäuse 13 aerodynamisch günstig zu gestalten ist, damit es sowohl in der Belüftungs- als auch in der Entlüftungsstellung einen geringen Luftwiderstand hat, andererseits aber die Luftleitschaufeln 29 für einen genügenden Luftdurchsatz ins Fahrzeuginnere bzw. aus dem Fahrzeug heraus sorgen. Damit mit dem Fahrtwind in das Lüftergehäuse 13 eintretendes Regenwasser nicht ins Fahrzeuginnere gelangen kann, ist einerseits am Einsatzteil 3 ein Kragen 30 ausgebildet, der sich oberhalb des Ringflansches 4 in das Lüftergehäuse 13 erstreckt, und andererseits sind Wasserabflußöffnungen 31 am Lüftergehäuse 13 ausgebildet, durch die Regenwasser aus dem Luftraum 27 und auch aus dem Raum zwischen Bodenplatte 24 und Fahrzeugdachblech 2 abfließen kann.

Damit der Lüfter nach der Neuerung nach dem Einbau in ein Fahrzeug auch vom Fahrzeug-inneren aus einen ästhetisch befriedigenden Eindruck macht, ist noch ein Abdeckring 32 vorgesehen, der den meist ausgefransten Spalt zwischen Einsatzteil 3 und dem Ausschnitt in der Fahrzeugwand abdeckt. Dieser Abdeckring 32 wird nach dem Einbau vom Fahrzeuginneren aus über das zylindrische Einsatzteil 3 gegen die Innenseite der Fahrzeugwand bzw. der Wandverkleidung geschoben, wobei der Abdeckring 32 beispielsweise in den Außenkerben 8 einrasten und sich gegen diese abstützen kann.

## Patentansprüche

1. Lüfter zur Montage in einem Wand-, insbesondere einem Dachausschnitt eines Transportfahrzeugs, mit einem Lüftergehäuse mit gegen die Fahrtrichtung geneigten Luftleitschaufeln, sowie mit
- einem Einsatzteil (3) mit einer Luftdurchtrittsöffnung (9) zur Befestigung in dem Ausschnitt der Fahrzeugwand, und
- einer in einer Nabe (11) des Einsatzteils (3) gelagertehLüfterwelle (12), auf der drehfest das Lüftergehäuse befestigt ist, **dadurch gekennzeichnet, daß** das Lüffergehäuse in dem Ausschnitt um 180° in eine Be- und in eine Entlüftungsstellung in bzw. entgegen der Fahrtrichtung drehbar ist
- und eine zwischen Lüfterwelle (12) und Nabe (11) angreifende Druckfeder (17) vorgesehen ist, die über die Welle (12) das Lüftergehäuse (13) in Anlage gegen die Außenseite der Fahrzeugwand zieht.

2. Lüfter nach Anspruch 1, **gekennzeichnet durch,**
- einen Drehgriff (14) am inneren Ende der Lüfterwelle (12).

3. Lüfter nach Anspruch 1 oder 2, **dadurch gekennzeichnet, dass** zwischen Lüfterwelle (12) und Nabe (11) eine Rasteinrichtung (15,16) ausgebildet ist, die die Welle (12) und mit ihr das Lüftergehäuse (13) in den um 180° gedrehten Stellungen festlegt.

4. Lüfter nach Anspruch 3, **gekennzeichnet durch,** eine auf die Lüfterwelle (12) aufgeschraubte Rändelmutter (22), die in Anlage gegen die Nabe (11,23) schraubbar ist, um das Lüftergehäuse (13) in den eingerasteten Stellungen zu sichern und in Anlage gegen die Außenseite der Fahrzeugwand zu ziehen.

5. Lüfter nach einem der vorstehenden Ansprüche, **dadurch gekennzeichnet, dass** das Lüftergehäuse (13) ein Gehäuseoberteil (25) mit einem mit den Luftleitschaufeln (29) bestückten Lufteinlaß bzw. Luftauslaß sowie einen um das Einsatzteil (3) herum ausgeschnittenen Gehäuseboden (24) besitzt, und dass an dem Gehäuseboden (24) Profilschläuche (21) zur Auflage und Abdichtung an der Fahrzeugwand angebracht sind.

6. Lüfter nach einem der vorstehenden Ansprüche, **dadurch gekennzeichnet, dass** das Einsatzteil (3) um ein Zylinder- oder Prismateil mit der Luftdurchtrittsöffnung (9) einen Ringflansch (4) mit Löchern für Befestigungsschrauben (5) aufweist, und dass das Zylinder- bzw. Prismateil auf der einen Seite des Ringflansches (4) einen Kragen (30) bildet, der den Eintritt von Wasser in die Luftddurchtrittsöffnung (9) weitgehend verhindert.

7. Lüfter nach Anspruch 6, **dadurch gekennzeichnet, dass** das Zylinder- bzw. Prismateil am Einsatzteil (3) auf der anderen Seite des Ringflansches (4) einen Überstand (7) mit Abtrennkerben (8) zum Abschneiden oder Abbrechen in gewünschter Höhe sowie einen Abdeckring (32) zum Überstreifen über das Zylinder- bzw. Prismateil und zum Abdecken des Wandausschnitts und der Befestigungsschrauben (5) aufweist.

## Claims

1. A ventilator for mounting in a wall, more particularly, roof opening of a transport vehicle comprising a ventilator cowl including shrouds inclined facing or opposing the direction of travel, as well as
- an adapter (3) including an air conduit (9) for securing in the opening in the vehicle wall, and
- a ventilator shaft (12) mounted in a hub (11) of the adapter (3) on which the ventilator cowl is non-rotatably secured, **characterized in that**
- said ventilator cowl (1) is rotatable in said opening through 180° into an air ingress position and an air egress position facing and opposing the direction of travel respectively, and
- a compression spring (17) is provided to engage between ventilator shaft (12) and hub (11) for drawing said ventilator cowl (13) via said ventilator shaft (12) into contact with the outer side of said vehicle wall.

2. The ventilator as set forth in claim 1, **characterized by**
- a star handle (14) at the inner end of said ventilator shaft (12).

3. The ventilator as set forth in claim 1 or 2, **characterized in that** configured between ventilator shaft (12) and hub (11) is a means (15, 16) locking said shaft (12) together with said ventilator cowl (13) in said positions turned through 180°.

4. The ventilator as set forth in claim 3, **characterized by** a knurled nut (22) screwed onto said ventilator shaft (12) for contacting said hub (11, 23) to lock said ventilator cowl (13) in said latched positions and draw it into contact with the outer side of said vehicle wall.

5. The ventilator as set forth in any of preceding claims, **characterized in that** said ventilator cowl (13) comprises a cowl upper (25) including an air intake or air outlet fitted with said shrouds (29) as well as a base plate (24) cutout surrounding said adapter (3) and that flexible tubular seals (21) are fitted to said base plate (24) for forming a seal with said vehicle wall.

6. The ventilator as set forth in any of preceding claims, **characterized in that** said adapter (3) comprises surrounding a cylindrical or prismatic part with said air conduit (9) a ring flange (4) including holes for self-tapping screws (5), and that said cylindrical or prismatic part forms on one side of said ring flange (4) a collar (30) substantially preventing ingress of water into said air conduit (9).

7. The ventilator as set forth in claim 6, **characterized in that** said cylindrical or prismatic part on said adapter (3) comprises on the other side of said ring flange (4) a protuberance (7) including outer notches (8) for cutting or snapping off to the desired height as well as a trim ring (32) for slipping over said cylindrical or prismatic part to cover said wall opening and said self-tapping screws (5).

## Revendications

1. Ventilateur destiné à être monté dans une ouverture d'une paroi, notamment une ouverture de toit d'un véhicule de transport, comportant un carter muni d'aubes de guidage de l'air, qui sont inclinées dans la direction de déplacement, comportant en outre :
une partie formant insert (3) comportant un ouverture (9) de passage de l'air et destiné à être fixé dans l'ouverture de la paroi du véhicule, et
un arbre de ventilateur (12), qui est monté dans un moyeu (11) de la partie formant insert (3) et sur lequel le carter de ventilation est fixé avec blocage de rotation, **caractérisé en ce que** le carter peut tourner à 180° dans l'ouverture pour être amené dans une position d'aération et une position de désaération dans le sens du déplacement ou en sens opposé,
et un ressort de pression (17), agit entre l'arbre (12) du ventilateur et le moyeu (11) et, par l'intermédiaire de l'arbre (12), applique le carter (13) du ventilateur contre la face extérieure de la paroi du véhicule.

2. ventilateur selon la revendication 1, **caractérisé par** :
- une poignée rotative (14) montée sur l'extrémité intérieure de l'arbre (12) du ventilateur.

3. Ventilateur selon la revendication 1 ou 2, **caractérisé en ce qu'**entre l'arbre (12) du ventilateur et le moyeu (11) est disposé un dispositif d'encliquetage (15, 16), qui fixe l'arbre (12) et, avec ce dernier, le carter (13) du ventilateur dans des positions pivotées de 180°.

4. Ventilateur selon la revendication 3, **caractérisé par** un écrou moleté (22), qui est vissé sur l'arbre (12) du ventilateur et peut être vissé de manière à s'appliquer contre le moyeu (11, 23) afin de bloquer le carter (13) du ventilateur dans les positions encliquetées et l'appliquer contre la face extérieure de la paroi du véhicule.

5. Ventilateur selon l'une des revendications précédentes, **caractérisé en ce que** le carter (13) du ventilateur comporte une partie supérieure (25) possédant une entrée ou une sortie pour l'air, qui est équipée des aubes (29) de guidage de l'air, ainsi qu'un fond (24) ouvert autour de l'élément formant insert (3), et que des tuyaux profilés (21) sont disposés sur le fond (24) du carter et sont destinés à s'appliquer contre la paroi du véhicule et à établir l'étanchéité contre cette paroi.

6. Ventilateur selon l'une des revendications précédentes, **caractérisé en ce que** l'élément formant insert (3) possède, autour d'une pièce cylindrique ou prismatique comportant l'ouverture (9) pour le passage de l'air, une bride annulaire (4) pourvue de trous pour des vis de fixation (5), et que la pièce cylindrique ou prismatique forme, d'un côté de la bride annulaire (4), un collet (30), qui empêche dans une large mesure la pénétration d'eau dans l'ouverture (9) de passage de l'air.

7. Ventilateur selon la revendication 6, **caractérisé en ce que** la pièce cylindrique ou prismatique comporte, sur l'autre côté de la bride annulaire (4), une partie saillante (7) comportant des encoches de séparation (8) pour permettre un sectionnement ou une rupture à la hauteur désirée ainsi qu'une bague de recouvrement (32) destinée à s'étendre au-dessus de la pièce cylindrique ou de la pièce prismatique et recouvrir l'ouverture de la paroi et les vis de fixation (5).
